# EUROPEAN PATENT APPLICATION

(11) **EP 4 538 849 A1**
(43) Date of publication of application: **16.04.2025**
(21) Application number: 24202646.6
(22) Date of filing: 25.09.2024
(51) Int. Cl.: G06F 3/06, G06F 13/10

(54) **NVME FABRICS TO VVOL BRIDGE FOR DPU STORAGE**

(30) Priority: 09.10.2023 US 202318377829; 09.10.2023 US 202318377830
(71) Applicant: VMware LLC, Palo Alto, CA 94304 (US)
(72) Inventor: Kalluri, Hemanth, Palo Alto, 94304 (US); Gondi, Anjaneya Prasad, Palo Alto, 94304 (US); Acharya, Sanjay Vasudev, Palo Alto, 94304 (US); Cherian, Shoby A., Palo Alto, 94304 (US)
(74) Representative: Dilg, Haeusler, Schindelmann Patentanwaltsgesellschaft mbH

(57) **Abstract**

Some embodiments provide a novel method for emulating a local storage for a host computer comprising a network interface card (NIC). On the NIC, a storage emulator program is deployed to emulate a local virtual volume (vVol) storage, from several external storages accessed through the NIC, for a set of processes executing on the host computer. The several external storages include at least one external storage that is not a native vVol storage. An interface of a bus is configured on the NIC to connect the NIC to the host computer to provide the emulated local vVol storage for the set of processes.

## Description

### BACKGROUND

In recent years, there has been an increase in the use of hardware offload units to assist functions performed by programs executing on host computers. Examples of such hardware offload units include FGPAs, GPUs, smart NICs, etc. Such hardware offload units have improved performance and efficiency requirements of the host computers by offloading some of the operations that are typically performed by the host computer CPU to the hardware offload unit.

### BRIEF SUMMARY

Some embodiments provide a novel method for emulating a local storage for a host computer comprising a network interface card (NIC). On the NIC, a storage emulator program is deployed to emulate a local virtual volume (vVol) storage, from several external storages accessed through the NIC, for a set of processes executing on the host computer. The several external storages include at least one external storage that is not a native vVol storage. An interface of a bus is configured on the NIC to connect the NIC to the host computer to provide the emulated local vVol storage for the set of processes.

In some embodiments, the interface is configured by configuring a virtual function (VF) of a physical function (PF) of the interface to provide the emulated local vVol storage for the set of processes. The PF is a physical interface of the NIC, and the VF is a virtualized interface of the physical interface of the NIC. The VF and PF allow the host computer to connect to the NIC. The bus is in some embodiments a peripheral component interconnect express (PCIe) bus or fabric.

The storage emulator program is deployed in some embodiments by configuring it with a storage conversion application to convert the at least one external storage that is not a native vVol storage to at least one vVol storage such that the local vVol storage is emulated using only vVol storages. In such embodiments, the storage conversion application allows the storage emulator program to use non-vVol storages when emulating the local vVol storage.

In some embodiments, the storage emulator program is implemented as a virtual machine (VM) executing on the NIC. In other embodiments, the storage emulator program is implemented as an application executing on the NIC. In both embodiments, the storage emulator program is deployed within the NIC's operating system (OS) to convert non-vVol storages into vVol storages and to emulate local storages to the host computer.

The method of some embodiments configures the storage emulator program to use the interface of the bus to present the local vVol storage as if it were an NVMe device local to the host computer. In some of these embodiments, the local vVol storage is presented as if it were the NVMe device local to the host computer by connecting the local vVol storage to an NVMe driver of the host computer. In such embodiments, the storage emulator program (e.g., through a non-volatile memory express (NVMe) driver) presents the emulated local storage through the bus interface to a driver (e.g., an NVMe/PCIe driver) of the host computer. The set of processes access the emulated local vVol storage through the driver of the host computer.

In some embodiments, the set of processes includes a set of one or more machines (e.g., VMs, containers, pods, etc.) executing on the host computer. These machines use the emulated local vVol storage for sending NVMe requests and receiving NVMe responses. In some of these embodiments, the set of machines is a first set of machines executing on the host computer, and a second set of one or more machines executing on the host computer is unaware of the emulated local VVol storage. In such embodiments, only the machines (i.e., the first set of machines) that have the emulated storage emulated to them are aware of it. The other machines (i.e., the second set of machines) have no knowledge of the emulated local vVol storage. Conjunctively or alternatively, the set of processes includes a hypervisor and/or an OS executing on the host computer.

The method of some embodiments also deploys a network fabric driver on the NIC to access the several external storages through one or more intervening networks. The network fabric driver allows the storage emulator program to access the external storages for emulating to the host computer's processes. In some of these embodiments, the network fabric driver is a non-volatile memory express over fabric (NVMeOF) driver.

Some embodiments provide a novel method for configuring a NIC that is connected to a host computer and that emulates a local NVMe storage device for a set of processes executing on the host computer using several external storages. The method configures, on an OS of the NIC, a storage emulator program to present the several external storages to the set of processes as the local NVMe storage device. The method also configures, on the NIC, a disk device to exchange NVMe requests and responses between the set of processes and the external storages by exchanging the NVMe requests and responses (1) with a virtual NVMe (vNVMe) controller of the NIC through a storage stack of the OS, or (2) directly with the vNVMe controller such that the disk device bypasses the storage stack. Exchanging the NVMe requests and responses directly with the vNVMe controller optimizes performance of the NIC.

In some embodiments, the disk device is configured to exchange the NVMe requests and responses with the vNVMe controller through the storage stack or directly as configured by a network administrator. By allowing these two different configurations of the NIC OS, the network administrator is able to optimize the performance of the NIC OS.

The storage stack includes in some embodiments a filesystem device switch (FDS), a filesystem switch (FSS), and a virtual volume (vVol) FDS driver. The disk device connects to the FDS, which connects to the FSS through the FDS driver. The FSS connects to the vNVMe controller, which also connects to the storage emulator program through an NVMe/PCIe interface.

In some embodiments, the external storages include a set of one or more vVol storages, and the storage emulator program is configured to present the set of vVol storages as the local NVMe storage device. In such embodiments, the storage emulator program presents all vVol storages as a single NVMe storage device to the processes of the host computer for the processes to send NVMe requests and receive NVMe responses.

The set of vVol storages is in some embodiments a first set of vVol storages. In such embodiments, the several external storages used to emulate the local NVMe storage device also includes a particular set of one or more external storages that are not native vVol storages. To use these non-vVol storages to emulate the NVMe storage device, the storage emulator program is configured to convert the particular set of external storages into a second set of vVol storages. Then, the storage emulator program is able to present the first and second sets of vVol storages as the local NVMe storage device. By converting non-vVol storages into vVol storages, the storage emulator program can use any storage type when emulating a local NVMe storage device to the host processes.

In some embodiments, the storage emulator program presents the first and second sets of vVol storages as the local NVMe storage device through a VF of a PF of an interface of a bus. In such embodiments, the PF is a physical interface of the NIC, the VF is a virtualized interface of the physical interface of the NIC, and the bus is a PCIe bus.

The storage emulator program is configured in some embodiments with a storage conversion application to convert the particular set of external storages into the second set of vVol storages. Using this storage conversion application, the storage emulator program is able to use non-vVol storages when emulating the local NVMe storage device. In some embodiments, the storage emulator program is implemented as a VM executing on the NIC. In other embodiments, the storage emulator program is implemented as an application executing on the NIC.

In some embodiments, the storage emulator program comprises a vNVMe interface to connect the storage emulator program to the vNVMe controller of the NIC. Through this vNVMe interface, the vNVMe controller, and the disk device (and the storage stack, in some embodiments), the storage emulator program accesses the external storages.

In some embodiments, the set of processes includes a set of one or more machines (e.g., VMs, containers, pods, etc.) executing on the host computer. These machines use the emulated local NVMe storage device for sending NVMe requests and receiving NVMe responses. In some of these embodiments, the set of machines is a first set of machines executing on the host computer, and a second set of one or more machines executing on the host computer is unaware of the emulated NVMe storage device. In such embodiments, only the machines (i.e., the first set of machines) that have the emulated storage emulated to them are aware of it. The other machines (i.e., the second set of machines) have no knowledge of the emulated NVMe storage device. Conjunctively or alternatively, the set of processes includes a hypervisor and/or an OS executing on the host computer.

The preceding Summary is intended to serve as a brief introduction to some embodiments of the invention. It is not meant to be an introduction or overview of all inventive subject matter disclosed in this document. The Detailed Description that follows and the Drawings that are referred to in the Detailed Description will further describe the embodiments described in the Summary as well as other embodiments. Accordingly, to understand all the embodiments described by this document, a full review of the Summary, Detailed Description, the Drawings, and the Claims is needed. Moreover, the claimed subject matters are not to be limited by the illustrative details in the Summary, Detailed Description, and Drawings.

### BRIEF DESCRIPTION OF THE DRAWINGS

The novel features of the invention are set forth in the appended claims. However, for purposes of explanation, several embodiments of the invention are set forth in the following figures.
**Figure 1** illustrates one manner of using a smart NIC to emulate a local vVol storage that represents several external storages to a virtual machine executing over a hypervisor of a host computer.
**Figure 2** conceptually illustrates a process of some embodiments for emulating a local storage for a host computer that includes a NIC.
**Figure 3** conceptually illustrates a process of some embodiments for handling egress NVMe commands from the host to a third party external storage.
**Figure 4** illustrates a host that accesses external storages through a smart NIC to exchange NVMe commands and responses.
**Figure 5** conceptually illustrates a process of some embodiments for handling ingress NVMe responses from a third party external storage to a host.
**Figure 6** illustrates a NIC OS configured to perform a passthrough mechanism for optimal performance.
**Figure 7** illustrates an example scalable target service integrated at a kernel NVMe layer of a NIC OS.
**Figure 8** conceptually illustrates an electronic system with which some embodiments of the invention are implemented.

### DETAILED DESCRIPTION

In the following detailed description of the invention, numerous details, examples, and embodiments of the invention are set forth and described. However, it will be clear and apparent to one skilled in the art that the invention is not limited to the embodiments set forth and that the invention may be practiced without some of the specific details and examples discussed.

Some embodiments provide a novel method for emulating a local storage for a host computer comprising a network interface card (NIC). On the NIC, a storage emulator program is deployed to emulate a local virtual volume (vVol) storage, from several external storages accessed through the NIC, for a set of processes executing on the host computer. The several external storages include at least one external storage that is not a native vVol storage. An interface of a bus is configured on the NIC to connect the NIC to the host computer to provide the emulated local vVol storage for the set of processes.

In some embodiments, the interface is configured by configuring a virtual function (VF) of a physical function (PF) of the interface to provide the emulated local vVol storage for the set of processes. The PF is a physical interface of the NIC, and the VF is a virtualized interface of the physical interface of the NIC. The VF and PF allow the host computer to connect to the NIC. The bus is in some embodiments a peripheral component interconnect express (PCIe) bus or fabric.

The storage emulator program is deployed in some embodiments by configuring it with a storage conversion application to convert the at least one external storage that is not a native vVol storage to at least one vVol storage such that the local vVol storage is emulated using only vVol storages. In such embodiments, the storage conversion application allows the storage emulator program to use non-vVol storages when emulating the local vVol storage.

In some embodiments, the set of processes includes a set of one or more machines (e.g., virtual machines (VMs), containers, pods, etc.) executing on the host computer. These machines use the emulated local vVol storage for sending NVMe requests and receiving NVMe responses. In some of these embodiments, the set of machines is a first set of machines executing on the host computer, and a second set of one or more machines executing on the host computer is unaware of the emulated local VVol storage. In such embodiments, only the machines (i.e., the first set of machines) that have the emulated storage emulated to them are aware of it. The other machines (i.e., the second set of machines) have no knowledge of the emulated local vVol storage. Conjunctively or alternatively, the set of processes includes a hypervisor and/or an OS executing on the host computer.

The method of some embodiments also deploys a network fabric driver on the NIC to access the several external storages through one or more intervening networks. The network fabric driver allows the storage emulator program to access the external storages for emulating to the host computer's processes. In some of these embodiments, the network fabric driver is a non-volatile memory express over fabric (NVMeOF) driver.

Some embodiments provide a novel method for configuring a NIC that is connected to a host computer and that emulates a local NVMe storage device for a set of processes executing on the host computer using several external storages. The method configures, on an OS of the NIC, a storage emulator program to present the several external storages to the set of processes as the local NVMe storage device. The method also configures, on the NIC, a disk device to exchange NVMe requests and responses between the set of processes and the external storages by exchanging the NVMe requests and responses (1) with a virtual NVMe (vNVMe) controller of the NIC through a storage stack of the OS, or (2) directly with the vNVMe controller such that the disk device bypasses the storage stack. Exchanging the NVMe requests and responses directly with the vNVMe controller optimizes performance of the NIC.

In some embodiments, the disk device is configured to exchange the NVMe requests and responses with the vNVMe controller through the storage stack or directly as configured by a network administrator. By allowing these two different configurations of the NIC OS, the network administrator is able to optimize the performance of the NIC OS.

The storage stack includes in some embodiments a filesystem device switch (FDS), a filesystem switch (FSS), and a virtual volume (vVol) FDS driver. The disk device connects to the FDS, which connects to the FSS through the FDS driver. The FSS connects to the vNVMe controller, which also connects to the storage emulator program through an NVMe/PCIe interface.

In some embodiments, the external storages include a set of one or more vVol storages, and the storage emulator program is configured to present the set of vVol storages as the local NVMe storage device. In such embodiments, the storage emulator program presents all vVol storages as a single NVMe storage device to the processes of the host computer for the processes to send NVMe requests and receive NVMe responses.

The set of vVol storages is in some embodiments a first set of vVol storages. In such embodiments, the several external storages used to emulate the local NVMe storage device also includes a particular set of one or more external storages that are not native vVol storages. To use these non-vVol storages to emulate the NVMe storage device, the storage emulator program is configured to convert the particular set of external storages into a second set of vVol storages. Then, the storage emulator program is able to present the first and second sets of vVol storages as the local NVMe storage device. By converting non-vVol storages into vVol storages, the storage emulator program can use any storage type when emulating a local NVMe storage device to the host processes.

vVol storages, unlike traditional storages, can be dynamically allocated by a network administrator based on requirements. For example, when the network administrator configures a VM on a host computer, the storage for the VM can be dynamically allocated for the VM (based on the network administrator's requirements) when the storage used is a vVol storage. This VM is aware of the vVol storage and can provide services (e.g., middlebox services) on a per-vVol basis. All other VMs are unaware of the VVol storage. By converting non-vVol storages to vVol storages and by emulating a local vVol storage or a local NVMe storage to a host computer, the NIC provides a vVol bridge and provides data processing unit (DPU) storage offload for the host computer.

As used in this document, physical functions (PFs) and virtual functions (VFs) refer to ports exposed by a NIC using a PCIe interface. A PF refers to a physical interface of the NIC that is recognized as a unique resource with a separately configurable PCIe interface (e.g., separate from other PFs on a same NIC). A VF refers to a virtualized interface of the PF that is not separately configurable and is not recognized as a unique PCIe resource. VFs are provided, in some embodiments, to provide a passthrough mechanism that allows compute nodes executing on a host computer to receive data messages from the NIC without traversing a virtual switch of the host computer. The VFs, in some embodiments, are provided by the OS of the NIC.

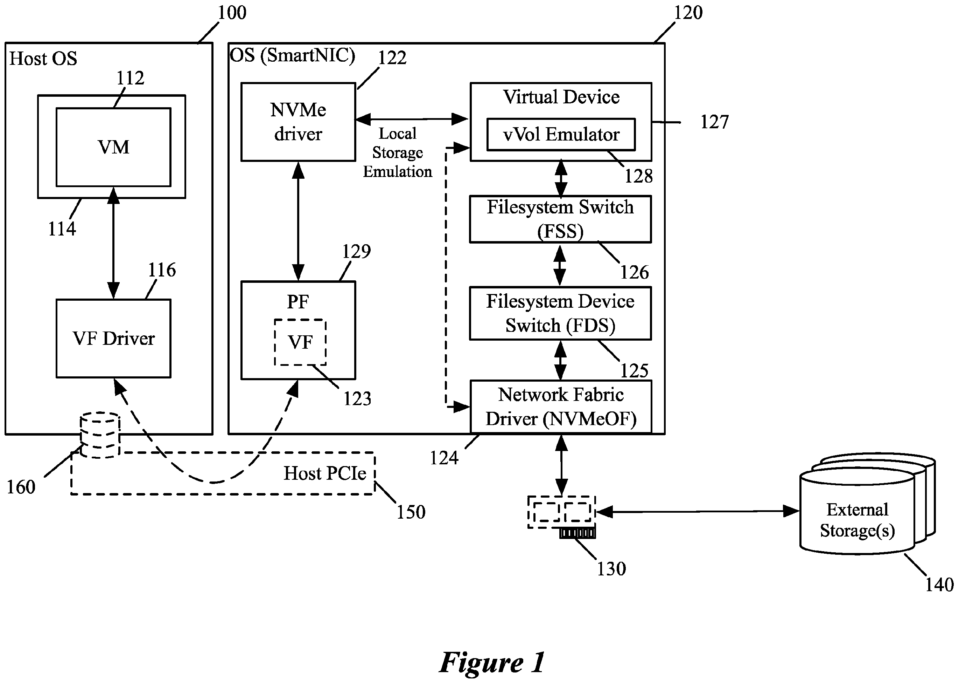

**Figure 1** illustrates one manner of using a smart NIC to emulate a local vVol storage 160 that represents several external storages 140 to one or more machines executing over the operating system (OS) 100 of a host computer. One example of such a machine is illustrated as a VM 112, which operates over a hypervisor 114 executing on the host OS 100. The host computer has a set of processors that executes its OS 100, hypervisor 114 and VM 112. This computer also includes a smart NIC that has a set of processors and a set of hardware offload units that assist in the operation of the host computer. Specifically, in addition to performing traditional NIC operations to forward packets to and from the host computer (e.g., between the machines executing on the host computer and machines executing on other host computers), the smart NIC performs storage emulation operations that represent multiple external storages 140 as a local vVol storage 160 to the machines executing on the host computer. The local vVol storage 160 is presented as a local NVMe storage device to the host. The smart NIC connects to PCIe bus 150 of the host to each a VF driver 116 of the host.

The smart NIC in some embodiments is a system on chip (SoC) with a CPU, FPGA, memory, IO controller, a physical NIC, and other hardware components. The smart NIC has an OS 120 that includes an NVMe driver 122 and a series of storage processing layers 124-127. The discussion below collectively refers to the software executing on the smart NIC as the smart NIC OS 120. However, in some embodiments, the smart NIC OS is a hypervisor, while in other embodiments a hypervisor executes on top of the smart NIC OS and some or all of the storage processing layers are part of this hypervisor. In the discussion below, the components that are attributed to the smart NIC OS 120 are components of the hypervisor 114 that serves as the smart NIC OS or executes on top of the smart NIC OS in some embodiments. In other embodiments, these are components of a smart NIC OS that is not a hypervisor. In still other embodiments, some of these components belong to the smart NIC OS, while other components belong to the hypervisor executing on the smart NIC OS.

The NVMe driver 122 is a driver for the PCIe bus 150. This driver uses the VF 123 of the PF 129 to relay NVMe formatted R/W requests from the host hypervisor 114 (through the VF driver 116) to the storage processing layers, and to relay responses to these requests from the storage processing layers to the host hypervisor 114. The storage processing layers include an NVMe Over Fabric (NVMeOF) driver 124, a file system device switch (FDS) 125, a filesystem switch (FSS) 126, and a virtual device service 127. The virtual device service includes a vVol emulator 128.

The smart NIC OS 120 uses the NVMeOF driver 124 in some embodiments to access one or more external storages 140 through one or more intervening networks (not shown). Specifically, the smart NIC OS 120 emulates a local vVol storage 160 to represent several external storages 140 to the VM 112 executing on the host. The local vVol storage 160 is only able to be seen by the VM 112. It cannot be seen by any other machines (e.g., any other VMs) executing on the host, as the virtual device service 127 did not emulate the vVol storage 160 for them. The VM 112 includes in some embodiments a VF driver (not shown) to connect to the VF 123.

The external storages 140 include at least one of vVol storages and external storages that are not native vVol storages (e.g., memory erase storages). From the host point of view, the VM 112 operates on the emulated local storage 160 as if it was a local vVol storage connected through the PCIe bus 150. Conjunctively or alternatively, the local storage 160 is emulated to the host OS 100 and/or the host hypervisor 114.

In some embodiments, the local storage 160 is emulated as a local NVMe storage device. In such embodiments, the smart NIC OS 120 can emulate this local NVMe storage device to machines of a host computer (such as the VM 112) and to bare metal servers (not shown).

To access the external storages 140, the smart NIC (e.g., the NVMeOF driver) uses one or more of its shared ports 130. The shared ports are not only used for the purposes of accessing external storage 140, but are also used for other purposes as well (e.g., used to forward packets to and from destinations other than the external storages). The NVMeOF driver 124 handles the NVMeOF protocols needed for communicating with the external storages 140 through network fabric (e.g., through routers).

The smart NICs illustrated in **Figure 1** as well as in other figures perform operations other than storage emulation in some embodiments. For instance, the smart NICs perform regular packet processing in order to forward packets to and from other destinations outside of the smart NIC's host computer that are not external storages. Examples of such other destinations include machines executing on other host computers. However, the illustration presented in **Figure 1** and the other figures focus on the components of the smart NIC that facilitate the storage emulation operations in order not to obscure the description of some embodiments with unnecessary detail.

The FSS 126 includes a file system switch and various file system modules (e.g., VM file system (VMFS) and network file system (NFS)). The FSS 126 interfaces with other layers and forwards I/O commands to the correct file system implementation. For example, if an I/O command is destined for an NFS, the I/O command exits the storage stack at the FSS 126.

The FDS 125 includes a file system device switch and various file system device drivers. The FDS 125 provides an abstraction of the physical storage device from file system specific implementations (e.g., disk devices, char devices, etc.). The FDS 125 interfaces with other layers and forwards calls to the correct FDS driver. In other words, I/O commands from the FDS 125 is routed to the correct backend device.

Rather than exchanging data through the entire series of storage processing layers 124-127, some embodiments instead exchange data directly between the NVMeOF driver 124 and the virtual device service 127. By skipping the FDS 125 and the FSS 126, the smart NIC OS 120 optimizes performance and decreases compute time. Further information regarding this passthrough mechanism will be described below.

The virtual device service 127 is a storage emulator program of the smart NIC OS 120, deployed as VM or an application. In some embodiments, the virtual device service 127 performs two functions. First, it exposes vVol and non-vVol storages (e.g., external storages 140) to the VM 112 as a local vVol storage 160. Using the vVol emulator 128, the virtual device service 127 converts non-vVol storages 140 to vVol storages to present to the VM 112. In such embodiments, the vVol emulator 128 is a storage conversion application (e.g., vSphere APIs for Storage Awareness (VASA) client offered by VMware, Inc.) running within the virtual device service 127.

In some embodiments, the virtual device service 127 also uses a protocol endpoint (not shown) to configure the vVol storages from the non-vVol storages. A protocol endpoint is a logical I/O proxy that communicates with vVols and virtual disk files the vVols encapsulate. Each accessed vVol storage and each converted vVol storage is associated with a particular protocol endpoint of the virtual device service 127.

The second function of the virtual device service 127 is to configure vVol storages for the VM 112 for a particular period of time, as specified by a network administrator. In such embodiments, the network administrator (e.g., through a user interface (UI), a graphical user interface (GUI), etc.) requests to the smart NIC OS 120 that the virtual device service 127 configures a vVol storage for the VM 112 for a particular period of time (e.g., from a first date to a second date). After this request, the virtual device service 127 configures the vVol, and presents it as the local storage 160 for the particular period of time.

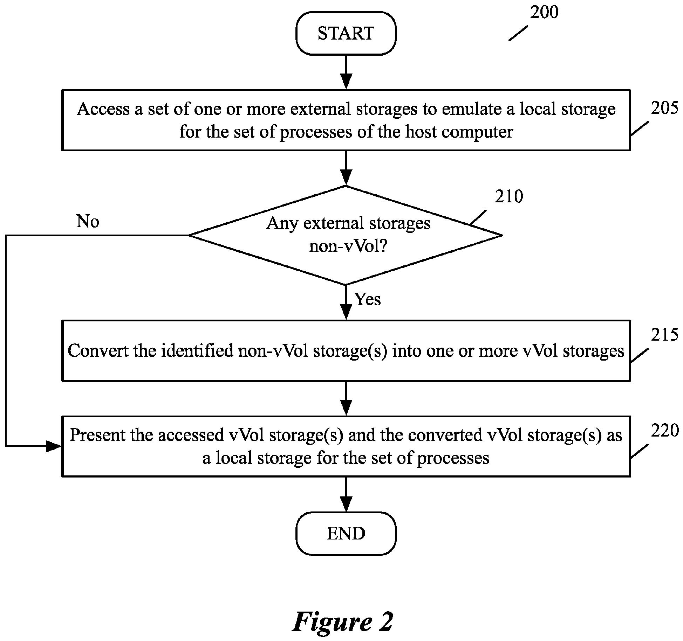

**Figure 2** conceptually illustrates a process 200 of some embodiments for emulating a local storage for a host computer that includes a NIC. This process 200 is performed by a storage emulator program (such as the virtual device service 127 of **Figure 1**), which is also referred to as a scalable target service in some embodiments. The process 200 is performed for a set of one or more processes executing on a host computer, and the set of processes can include machines (e.g., VMs, containers, pods), an OS of the host computer, and/or a hypervisor of the host computer. In some embodiments, the host computer executes other processes that do not have the local storage emulated to them. In other embodiments, all processes of the host computer have the local storage emulated to them.

The process 200 begins by accesses (at 205) a set of one or more external storages to use to emulate a local storage for the set of processes executing on the host computer. The storage emulator program, through a network fabric driver of the NIC, accesses one or more external storages to emulate for the host computer. The storage emulator program includes an NVMe PCIe interface that connects to a virtual vNVMe controller of the NIC OS to connect to the network fabric driver. In some embodiments, the storage emulator program accesses the set of external storages directly through the network fabric driver. In other embodiments, the storage emulator program accesses the set of external storages through a storage stack of the NIC's OS. The storage stack includes the network fabric driver, an FDS, and an FSS. The storage stack in some embodiments also includes a provider endpoint, a disk device, and a vVol FDS driver, a device file system (devFS), a network file system (NFS), and a VM file system (VMFS).

Next, the process 200 determines (at 210) whether any of the set of external storages are non-vVol storages. The storage emulator program presents only vVol storages as a single local storage to the host computer. However, the set of external storages can include storages that are not native vVol storages. Because of this, the storage emulator program determines whether any of the external storages it accessed are non-vVol storages so it can convert them into vVol storages.

If the process 200 determines that none of the set of external storages are non-vVol storages, the process 200 proceeds to step 220, which will be described below. If the process 200 determines that at least one of the set of external storages are non-vVol storages, the process 200 converts (at 215) the identified non-vVol storage(s) to one or more vVol storages. Using a storage conversion application (e.g., a VASA client offered by VMware, Inc.) running within the storage emulator program, the storage emulator program converts each identified non-vVol storage to a vVol storage. The storage emulator program also uses in some embodiments a protocol endpoint (PE) executing within the storage emulator program to convert non-vVol storages to vVol storages.

For example, in some embodiments, the storage conversion application communicates with the actual storage array being emulated to the host computer and is used to provision the vVol storages. In such embodiments, the PE acts as a path for information for the vVol storages. Once the storage conversion application provisions the vVol storages, the spaces for them are carved out of the backend storage into vVol storages, and those vVol storages are exposed to the storage emulator program. The storage emulator program in some embodiments converts all identified non-vVol storages into one single vVol storages. In other embodiments, it converts each identified non-vVol storage into its own vVol storage.

Lastly, the process 200 presents (at 220) the accessed vVol storages of the set of external storages and the converted vVol storages converted from the accessed non-vVol storages of the set of external storages as a local storage for the set of processes executing on the host computer. In some embodiments, the set of processes for which the local storage is emulated is the only set of processes of the host computer aware of the emulated storage. Other processes (e.g., other machines) of the host computer are not aware of the emulated local storage. To these other processes, rather than seeing what this device is, they see it as just some data being exchanged with the NIC.

In some embodiments, the storage emulator program presents the local storage as a local vVol storage to the processes of the host computer. Because machines (e.g., VMs) are able to consume vVol storages, the storage emulator program can present the local storage as a local vVol storage. In other embodiments, the storage emulator program presents the vVol storages as a local NVMe storage or a local PCIe storage. Furthermore, in some embodiments, the local NVMe or PCIe storage is presented as a set of NVMe or PCIe local namespaces. When the host computer is unable to understand vVol storage types (e.g., because the host computer is not configured to do so), the storage emulator program presents the vVol storages as either NVMe local namespaces or PCIe local namespaces, as the host computer understands NVMe and/or PCIe.

After presenting the local storage for the set of processes, the process 200 ends. In some embodiments, the storage emulator program presents the local storage for the set of processes for a particular period of time (e.g., as specified by a network administrator). In other embodiments, the storage emulator program presents the local storage indefinitely.

The storage emulator program in some embodiments is capable of presenting vVol and/or non-vVol storages to a bare metal server as a local NVMe storage device. In such embodiments, a bare metal server is incapable of consuming a local vVol storage, so the storage emulator program presents it as an NVMe storage.

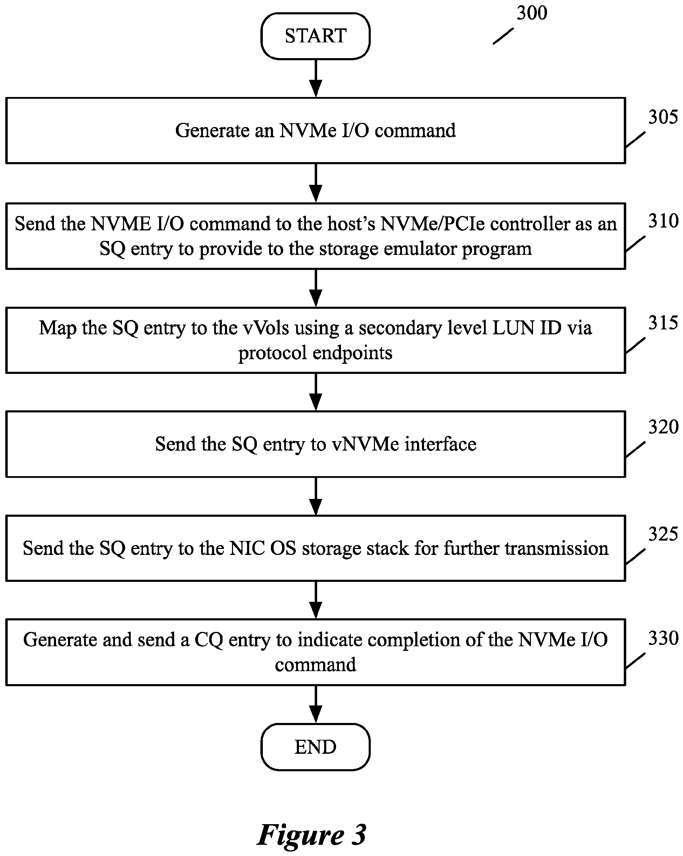

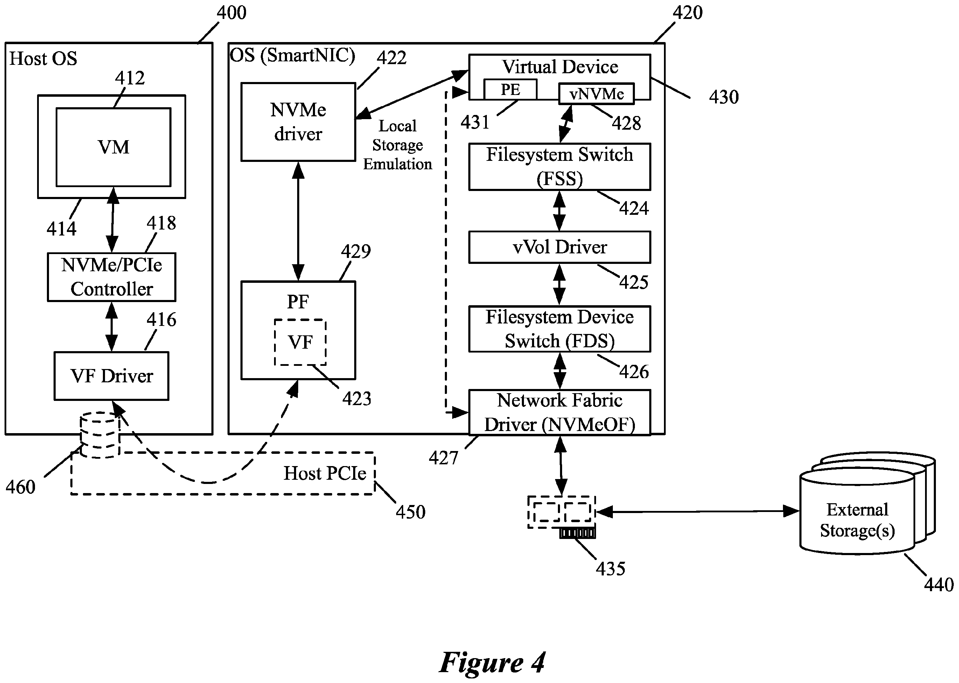

**Figure 3** illustrates a process 300 that some embodiments perform to handle egress NVMe commands from the host to a third party external storage. The process 300 will be described in relation to the components illustrated in **Figure 4****.**

The process 300 begins (at 305) when a workload VM or an application running on the host generates an NVMe I/O command (with data). The VM 412 executing on top of the hypervisor 414 of the host OS 400 generates the NVMe I/O command to be sent to the local storage 460 emulated from the external storages 440. The external storages 440 include at least one of a vVol storage and a non-vVol storage that the virtual device service 430 uses to emulate the local storage 460. In embodiments where the external storages 440 include only vVol storages, the virtual device service 430 presents the vVol storages as one local NVMe storage 460 to the VM 412. In embodiments where the external storages 440 include at least one non-vVol storage, the virtual device service 430 first converts the non-vVol storage(s) to vVol storages before emulating the NVMe storage 460.

Next, at 310, the NVMe I/O command is sent to the local NVMe/PCIe controller of the host as a submission queue (SQ) entry. The VM 412 sends the generated NVMe I/O command to the NVMe/PCIe controller 418 of the host OS 400, which provides it to the virtual device service 430 through the VF driver 416 of the host OS 400, the VF 423 and PF 429 of the NIC OS 420, and the NVMe driver 422 of the NIC OS 420.

The VM 412 sends the NVMe I/O command as an SQ entry as the emulated NVMe device 460 processes I/O commands using submission queues. A submission queue is a circular buffer with a fixed slot size that the host uses to submit commands to the emulated NVMe device 460. A submission queue entry is a command that is 64 bytes in size.

At 315, the SQ entry is mapped to the vVols using a secondary level logical unit number (LUN) identifier (ID) via protocol endpoints. After receiving the SQ entry from the NVMe/PCIe controller 418, the virtual device service 430 maps the SQ entry to the vVol storages used to emulate the NVMe storage device 460. Each of these vVol storages 440 in some embodiments is associated with its own LUN ID, which is assigned by the virtual device service 430, in some embodiments. Any other suitable identifier (e.g., universally unique identifier (UUID), globally unique identifier (GUID), etc.) may be used for storages. A protocol endpoint 431 executing along with the virtual device service 430 maintains and stores a table mapping storages to LUN IDs. Using this information and information specified in the SQ entry, the virtual device service 430 determines which accessed and converted vVol storages are being used to emulate the NVMe device 460.

At 320, the SQ entry is sent to the vNVMe interface, which, at 325, sends the SQ entry to the NIC's OS storage stack for further transmission. After identifying the vVol storages used to emulate the NVMe device 460, the virtual device service 430 provides the SQ entry to the vNVMe interface 428, which sends it along the storage stack 424-427. The storage stack includes an FSS 424, a vVol driver 425, an FDS 426, and an NVMe OF driver 427. The storage stack 424-427 forwards the SQ entry to the external storages 440 for processing.

Lastly, at 330, a completion queue (CQ) entry is generated and sent to indicate completion of the NVMe I/O command. After sending the SQ entry off for further transmission through the storage stack 424-427, the virtual device service 430 generates a CQ entry to provide back to the VM 412. A completion queue is a circular buffer with a fixed slot size used to post status for completed commands. After generating the CQ entry for the VM's NVMe I/O command, the virtual device service 430 sends it to the VM 412 through the NVMe driver 422, the VF 423 of the PF 429, the host PCIe 450, the VF driver 416, and the NVMe/PCIe controller 418. After sending the CQ entry, the process 300 ends.

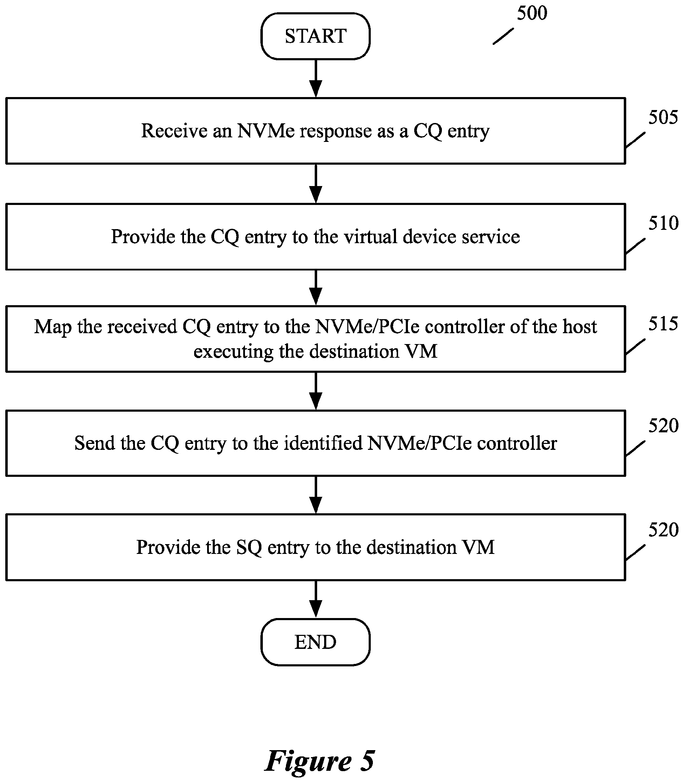

**Figure 5** illustrates a process 500 that some embodiments perform to handle ingress NVMe responses from a third party external storage to the host. The process 300 will also be described in relation to the components illustrated in **Figure 4****.**

The process 500 begins at 505 when an NVMe response is received as a CQ entry. The vNVMe interface 428 receives the NVMe response as a CQ entry from the external storages 440, which sent it to the vNVMe interface 428 through the storage stack 424-427. Then, at 510, the CQ entry is provided by the NVMe interface 428 to the virtual device service 430.

At 515, the received CQ entry is mapped to the NVMe/PCIe controller of the host executing the destination VM (i.e., the VM for which the response is to be sent). Using a virtual function, the virtual device service 430 maps the CQ entry to the NVMe/PCIe controller 418 of the host executing the VM 412 (which is the destination of the NVMe responses). In some embodiments, the virtual device service 430 maintains a mapping table that maps information specified in CQ entries to different PFs and/or VFs, which are connected to different NVMe/PCIe controllers. Using the information specified in the received CQ entry, the virtual device service 430 identifies the VF 423 to identify the NVMe/PCIe controller 418.

Then, at 520, the CQ entry is sent to the identified NVMe/PCIe controller. After identifying the NVMe/PCIe controller 418 of the host, the virtual device service 430 forwards the CQ entry (i.e., the NVMe response) through the NVMe driver 422, the VF 423 of the PF 429, the host PCIe 450, and the VF driver 416 to reach the NVMe/PCIe controller 418.

Lastly, the CQ entry is provided to the destination VM. After receiving the CQ entry from the virtual device service 430, the NVMe/PCIe controller 418 provides the CQ entry to the VM 412. After providing the SQ entry to the VM 412, the process 500 ends.

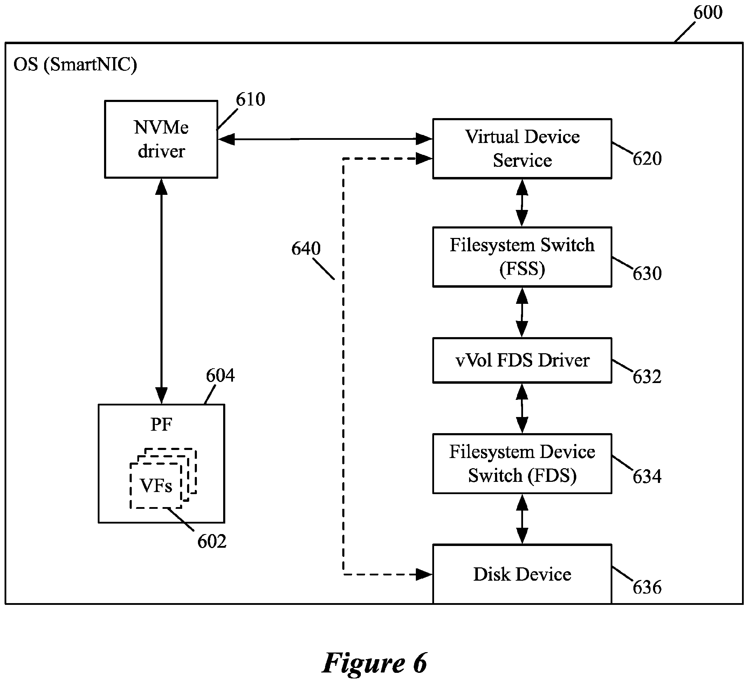

As discussed previously, some embodiments use a passthrough mechanism for a NIC storage stack. **Figure 6** illustrates a NIC OS 600 that is configured to perform such a passthrough mechanism. The NIC OS 600 includes a set of VFs 602 executing on a PF 604, which allows communication (e.g., through an interface, such as a PCIe bus) between the NIC and the host computers and/or bare metal servers (not shown) for which it emulates storage. The PF 604 is a physical interface of the NIC, and the VFs 602 are virtualized interfaces of the PF 604.

The VFs 602 connect to an NVMe driver 610, which connects to a virtual device service 620. The PF 604 is a physical interface of the NIC, and the VFs 602 are virtualized interfaces of the PF 604. In some embodiments, the emulated storage is presented through an interface, such as a PCIe bus (such as the PCIe 150 of **Figure 1** or 450 of **Figure 4**).

The NIC OS 600 emulates a single vVol storage or a single NVMe storage device for processes executing on host computers (e.g., host computer Oss, host computer hypervisors, machines (e.g., VMs or containers), etc.), and emulates a single NVMe storage device for bare metal servers.

The virtual device service 620 (like the virtual device service 127 of **Figure 1** and 430 of **Figure 4**) is a storage emulator program deployed as a VM or an application on the NIC OS 600. The virtual device service 620 (e.g., using a storage conversion program) converts non-vVol storages to vVol storages and presents vVol storages as a single vVol storage or a single NVMe storage device to machines executing on host computers and/or bare metal servers. To connect to the external storages (not shown) from which the virtual device service 620 emulates vVol and NVMe storages, the virtual device service 620 communicates with a disk device 636 through to a storage stack 630-634. The storage stack 630-634 includes an FSS 630, a vVol FDS driver 632, and an FDS 634.

To exchange requests and responses with the external storages, the virtual device service 620 can either (1) communicate with the disk device 636 using the entire storage stack 630-634, or (2) directly communicate with the disk device 636 (i.e., the passthrough 640). The NIC 600 is in some embodiments configured by a network administrator to use the passthrough 640 rather than using the storage stack 630-634. By using this passthrough 640, the NIC OS 600 optimizes the performance of the NIC and decreases its compute time.

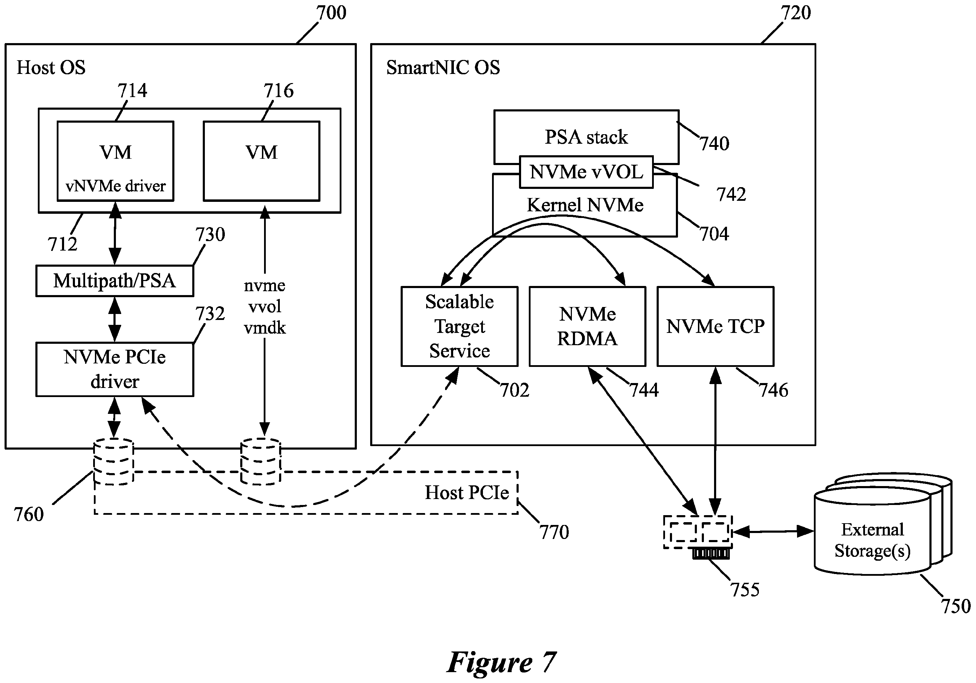

**Figure 7** illustrates an example scalable target service 702 integrated at a kernel NVMe layer 704 of a NIC OS 720. The host OS 700 includes a hypervisor 712 executing a first VM 714 executing a vNVMe driver and a second VM 716 that uses NVMe vVol vmdk. The host OS 700 also includes a multipath PSA layer 730, and an NVMe PCIe driver 732 that connects the scalable target service 702 through a PCIe bus 770 to emulate the local storage 760.

The NIC OS 720 includes a PSA stack 740 and an NVMe vVol interface 742 that connects the PSA stack 740 to the kernel NVMe layer 704. The NIC OS 720 also includes an NVMe RDMA driver 744 and an NVMe TCP driver 746 that connect to the external storages 750 to emulate the local storage 760.

The multipath PSA service 730 is provided for one or more VMs 714-716 through the host hypervisor 712. Specifically, in this example, a multipath PSA layer 730 exists between the VMs 714-716 executing on the host OS 700 and the NVMe PCIe driver 732 of the OS. Through this PSA layer 730, the host can use multiple paths to the same external storage by using different NVMe PCIe drivers executing on the host OS 700 (although only one NVMe PCIe driver 732 is shown in **Figure** 7). In other words, for multi-pathing, different PCIe drivers are also used in some embodiments to access the same external storage through different paths. Also, in some embodiments, the different NVMe PCIe drivers are used to emulate different local storages from different external storages 750.

In this example, the scalable target service 702 exchanges data messages with a kernel NVMe layer 704, which exchanges data messages with an NVMe RDMA driver 744 and/or an NVMe TCP driver 746. The NVMe RDMA and TCP drivers send and receive data messages to and from external storages 750 through an intervening network fabric (e.g., intervening routers and switches).

Both the NVMe RDMA 744 and NVMe TCP 746 are provided by the smart NIC OS 720 for accessing remote external storages 750 through the shared port(s) 755 of the smart NIC. In some embodiments, the kernel NVMe 704 works like a multiplexer that provides NVMe storage access to the scalable target service 702 using different transports, such as NVMe RDMA 744 and NVMe TCP 746, as the same time.

One advantage of the approach of **Figure 7** is that the smart NIC OS 720 transfers data quickly between the host and the external storages 750 that is used to emulate the host's local storage 760. This transfer is fast because it uses the kernel NVMe 704 as a bridge. This embodiment can tap into NVMe RDMA offload capability by using the NVMe RDMA driver 744. Methods and systems regarding emulating a local storage for a host computer is further described in U.S. Patent Publication 2022/0100545, filed January 9, 2021, which is incorporated by reference.

Presenting vVol (and converted vVol) storages to a machine or a bare metal server as a single vVol storage allows for a highly scalable DPU storage. The single vVol storage can be emulated using any number of external storages, providing for a highly efficient storage for the machine or bare metal server. The vVol storages (whether they are natively vVol storages or are converted into vVol storages) can be dynamically allocated from the client side based on the client's requirements. Moreover, the machine and/or bare metal server is aware of the emulated storage, and can provide services on a per-vVol basis. Other machines or bare metal servers that do not have the vVol storage emulated to them, and the host itself, have no knowledge regarding the emulated vVol storage. In some embodiments, only the storage emulator program of the NIC OS is aware of the emulated vVol storage. Other components of the NIC OS (e.g., disk device, network fabric driver, FDS, FSS, etc.) have no knowledge of the emulated vVol storage. This allows the storage emulator program to dynamically control the type or types of storage are allocated to a machine or bare metal server.

Many of the above-described features and applications are implemented as software processes that are specified as a set of instructions recorded on a computer readable storage medium (also referred to as computer readable medium). When these instructions are executed by one or more processing unit(s) (e.g., one or more processors, cores of processors, or other processing units), they cause the processing unit(s) to perform the actions indicated in the instructions. Examples of computer readable media include, but are not limited to, CD-ROMs, flash drives, RAM chips, hard drives, EPROMs, etc. The computer readable media does not include carrier waves and electronic signals passing wirelessly or over wired connections.

In this specification, the term "software" is meant to include firmware residing in read-only memory or applications stored in magnetic storage, which can be read into memory for processing by a processor. Also, in some embodiments, multiple software inventions can be implemented as sub-parts of a larger program while remaining distinct software inventions. In some embodiments, multiple software inventions can also be implemented as separate programs. Finally, any combination of separate programs that together implement a software invention described here is within the scope of the invention. In some embodiments, the software programs, when installed to operate on one or more electronic systems, define one or more specific machine implementations that execute and perform the operations of the software programs.

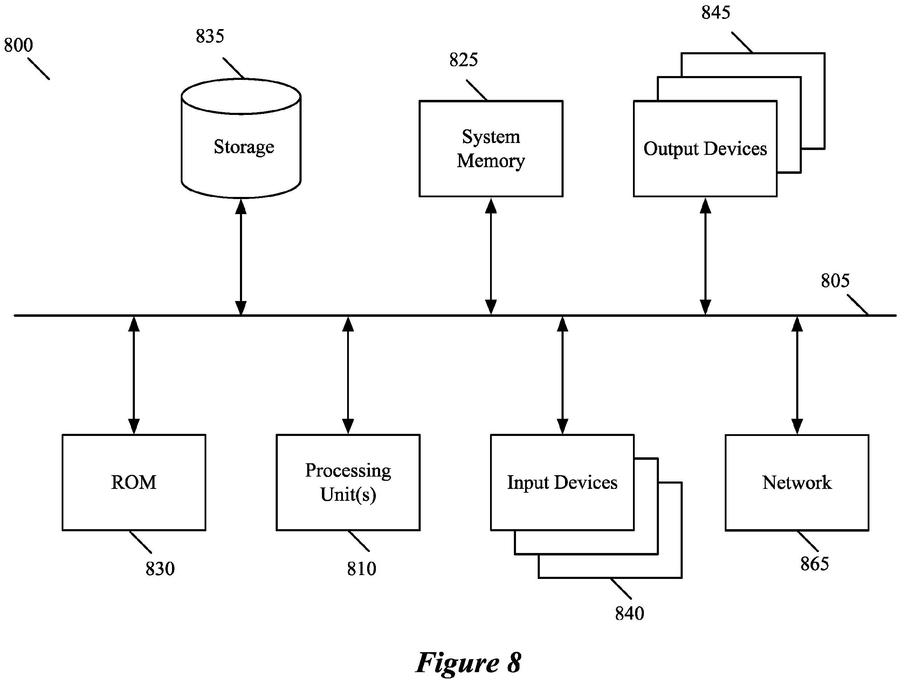

**Figure 8** conceptually illustrates a computer system 800 with which some embodiments of the invention are implemented. The computer system 800 can be used to implement any of the above-described computers and servers. As such, it can be used to execute any of the above described processes. This computer system includes various types of non-transitory machine readable media and interfaces for various other types of machine readable media. Computer system 800 includes a bus 805, processing unit(s) 810, a system memory 825, a read-only memory 830, a permanent storage device 835, input devices 840, and output devices 845.

The bus 805 collectively represents all system, peripheral, and chipset buses that communicatively connect the numerous internal devices of the computer system 800. For instance, the bus 805 communicatively connects the processing unit(s) 810 with the read-only memory 830, the system memory 825, and the permanent storage device 835.

From these various memory units, the processing unit(s) 810 retrieve instructions to execute and data to process in order to execute the processes of the invention. The processing unit(s) may be a single processor or a multi-core processor in different embodiments. The read-only-memory (ROM) 830 stores static data and instructions that are needed by the processing unit(s) 810 and other modules of the computer system. The permanent storage device 835, on the other hand, is a read-and-write memory device. This device is a non-volatile memory unit that stores instructions and data even when the computer system 800 is off. Some embodiments of the invention use a mass-storage device (such as a magnetic or optical disk and its corresponding disk drive) as the permanent storage device 835.

Other embodiments use a removable storage device (such as a flash drive, etc.) as the permanent storage device. Like the permanent storage device 835, the system memory 825 is a read-and-write memory device. However, unlike storage device 835, the system memory is a volatile read-and-write memory, such a random access memory. The system memory stores some of the instructions and data that the processor needs at runtime. In some embodiments, the invention's processes are stored in the system memory 825, the permanent storage device 835, and/or the read-only memory 830. From these various memory units, the processing unit(s) 810 retrieve instructions to execute and data to process in order to execute the processes of some embodiments.

The bus 805 also connects to the input and output devices 840 and 845. The input devices enable the user to communicate information and select commands to the computer system. The input devices 840 include alphanumeric keyboards and pointing devices (also called "cursor control devices"). The output devices 845 display images generated by the computer system. The output devices include printers and display devices, such as cathode ray tubes (CRT) or liquid crystal displays (LCD). Some embodiments include devices such as a touchscreen that function as both input and output devices.

Finally, as shown in **Figure 8****,** bus 805 also couples computer system 800 to a network 865 through a network adapter (not shown). In this manner, the computer can be a part of a network of computers (such as a local area network ("LAN"), a wide area network ("WAN"), or an Intranet, or a network of networks, such as the Internet. Any or all components of computer system 800 may be used in conjunction with the invention.

Some embodiments include electronic components, such as microprocessors, storage and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, read-only and recordable Blu-Ray^{®} discs, ultra-density optical discs, and any other optical or magnetic media. The computer-readable media may store a computer program that is executable by at least one processing unit and includes sets of instructions for performing various operations. Examples of computer programs or computer code include machine code, such as is produced by a compiler, and files including higher-level code that are executed by a computer, an electronic component, or a microprocessor using an interpreter.

While the above discussion primarily refers to microprocessor or multi-core processors that execute software, some embodiments are performed by one or more integrated circuits, such as application specific integrated circuits (ASICs) or field programmable gate arrays (FPGAs). In some embodiments, such integrated circuits execute instructions that are stored on the circuit itself.

As used in this specification, the terms "computer", "server", "processor", and "memory" all refer to electronic or other technological devices. These terms exclude people or groups of people. For the purposes of the specification, the terms display or displaying means displaying on an electronic device. As used in this specification, the terms "computer readable medium," "computer readable media," and "machine readable medium" are entirely restricted to tangible, physical objects that store information in a form that is readable by a computer. These terms exclude any wireless signals, wired download signals, and any other ephemeral or transitory signals.

While the invention has been described with reference to numerous specific details, one of ordinary skill in the art will recognize that the invention can be embodied in other specific forms without departing from the spirit of the invention. In addition, a number of the figures (including **Figures 2****,** **3****, and** **5**) conceptually illustrate processes. The specific operations of these processes may not be performed in the exact order shown and described. The specific operations may not be performed in one continuous series of operations, and different specific operations may be performed in different embodiments. Furthermore, the process could be implemented using several sub-processes, or as part of a larger macro process. Thus, one of ordinary skill in the art would understand that the invention is not to be limited by the foregoing illustrative details, but rather is to be defined by the appended claims.

In the following further aspects of the invention being directed to OPTIMIZING A NIC THAT EMULATES A LOCAL NVME STORAGE DEVICE FOR PROCESSES OF A HOST COMPUTER are defined in the following numbered clauses:
1. A method for configuring a network interface card (NIC) that is connected to a host computer and that emulates a local non-volatile memory express (NVMe) storage device for a set of processes executing on the host computer using a plurality of external storages, the method comprising:
   configuring, on an operating system (OS) of the NIC:
   a storage emulator program to present the plurality of external storages to the set of processes as the local NVMe storage device; and
   a disk device to exchange NVMe requests and responses between the set of processes and the plurality of external storages by exchanging the NVMe requests and responses (i) with a virtual NVMe (vNVMe) controller of the NIC through a storage stack of the OS, or (ii) directly with the vNVMe controller such that the disk device bypasses the storage stack, wherein exchanging the NVMe requests and responses directly with the vNVMe controller optimizes performance of the NIC.
2. The method of clause 1, wherein
   the disk device is configured to exchange the NVMe requests and responses with the vNVMe controller through the storage stack or directly as configured by a network administrator.
3. The method of clause 1, wherein
   the storage stack comprises a filesystem device switch (FDS), a filesystem switch (FSS), and a virtual volume (vVol) FDS driver.
4. The method of clause 1, wherein
   the plurality of external storages comprises a set of one or more virtual volume (vVol) storages, and the storage emulator program is configured to present the set of vVol storages as the local NVMe storage device.
5. The method of clause 4, wherein:
   the set of vVol storages is a first set of vVol storages,
   the plurality of external storages further comprises a particular set of one or more external storages that are not native vVol storages, and
   configuring the storage emulator program to present the plurality of external storages comprises configuring the storage emulator program to convert the particular set of external storages into a second set of vVol storages and to present the first and second sets of vVol storages as the local NVMe storage device.
6. The method of clause 5, wherein
   the storage emulator program presents the first and second sets of vVol storages as the local NVMe storage device through a virtual function (VF) of a physical function (PF) of an interface of a bus.
7. The method of clause 6, wherein
   the PF is a physical interface of the NIC.
8. The method of clause 7, wherein
   the VF is a virtualized interface of the physical interface of the NIC.
9. The method of clause 6, wherein
   the bus is a peripheral component interconnect express (PCIe) bus.
10. The method of clause 5, wherein
   the storage emulator program is configured with a storage conversion application to convert the particular set of external storages into the second set of vVol storages.
11. The method of clause 1, wherein
   the storage emulator program is implemented as a virtual machine (VM) executing on the NIC.
12. The method of clause 1, wherein
   the storage emulator program is implemented as an application executing on the NIC.
13. The method of clause 1, wherein
   the storage emulator program comprises a vNVMe interface to connect the storage emulator program to the vNVMe controller of the NIC.
14. The method of clause 1, wherein
   the set of processes comprises a set of one or more machines executing on the host computer.
15. The method of clause 14, wherein
   the set of machines is a first set of machines executing on the host computer, and a second set of one or more machines executing on the host computer are unaware of the emulated local VVol storage.
16. The method of clause 1, wherein
   the set of processes comprises a hypervisor executing on the host computer.
17. The method of clause 1, wherein the set of processes comprises an OS of the host computer.
18. A non-transitory machine readable medium storing a program for execution by at least one processing unit for configuring a storage emulator program that executes on an operating system (OS) of a network interface card (NIC) that is connected to a host computer and that emulates a local non-volatile memory express (NVMe) storage device for a set of processes executing on the host computer using a plurality of external storages, the program comprising sets of instructions for:
   configuring the storage emulator program to present the plurality of external storages to the set of processes as the local NVMe storage device; and
   configuring a disk device to exchange NVMe requests and responses between the set of processes and the plurality of external storages by exchanging the NVMe requests and responses (i) with a virtual NVMe (vNVMe) controller of the NIC through a storage stack of the OS, or (ii) directly with the vNVMe controller such that the disk device bypasses the storage stack, wherein exchanging the NVMe requests and responses directly with the vNVMe controller optimizes performance of the NIC.
19. The non-transitory machine readable medium of clause 18, wherein
   the storage stack comprises a filesystem device switch (FDS), a filesystem switch (FSS), and a virtual volume (vVol) FDS driver.
20. The non-transitory machine readable medium of clause 18, wherein
   the plurality of external storages comprises a set of one or more virtual volume (vVol) storages, and the storage emulator program is configured to present the set of vVol storages as the local NVMe storage device.

## Claims

1. A method for emulating a local storage for a host computer comprising a network interface card (NIC), the method comprising:
on the NIC:
deploying a storage emulator program to emulate a local virtual volume (vVol) storage, from a plurality of external storages accessed through the NIC, for a set of processes executing on the host computer, the plurality of external storages comprising at least one external storage that is not a native vVol storage; and
configuring an interface of a bus connecting the NIC to the host computer to provide the emulated local vVol storage for the set of processes.

2. The method of claim 1, wherein
configuring the interface comprises configuring a virtual function (VF) of a physical function (PF) of the interface to provide the emulated local vVol storage for the set of processes.

3. The method of claim 2, wherein
the PF is a physical interface of the NIC.

4. The method of claim 3, wherein
the VF is a virtualized interface of the physical interface of the NIC.

5. The method of any one of the claims 2 to 4, wherein
the bus is a peripheral component interconnect express (PCIe) bus.

6. The method of any one of the claims 1 to 5, wherein
deploying the storage emulator program to emulate the local vVol storage comprises configuring the storage emulator program with a storage conversion application to convert the at least one external storage that is not a native vVol storage to at least one vVol storage such that the local vVol storage is emulated using only vVol storages.

7. The method of claim 6, wherein
the storage emulator program is implemented as a virtual machine (VM) executing on the NIC.

8. The method of claim 6, wherein
the storage emulator program is implemented as an application executing on the NIC.

9. The method of any one of the claims 1 to 8, wherein
configuring the interface of the bus to provide the emulated local vVol storage comprises configuring the storage emulator program to use the interface of the bus to present the local vVol storage as if it were an NVMe device local to the host computer.

10. The method of claim 9, wherein
the local vVol storage is presented as if it were the NVMe device local to the host computer by connecting the local vVol storage to an NVMe driver of the host computer.

11. The method of any one of the claims 1 to 10, wherein
the set of processes comprise a set of one or more machines executing on the host computer; wherein in particular
the set of machines is a first set of machines executing on the host computer, and a second set of one or more machines executing on the host computer are unaware of the emulated local VVol storage.

12. The method of any one of the claims 1 to 11, wherein
the set of processes comprises a hypervisor executing on the host computer.

13. The method of any one of the claims 1 to 12, wherein
the set of processes comprises an operating system executing on the host computer.

14. The method of any one of the claims 1 to 13, further comprising
deploying a network fabric driver on the NIC to access the plurality of external storages through one or more intervening networks;
wherein in particular
the network fabric driver is a non-volatile memory express over fabric (NVMeOF) driver.

15. A non-transitory machine readable medium storing a program for execution by at least one processing unit of a network interface card (NIC) of a host computer for emulating a local storage for the host computer, the program comprising sets of instructions for controlling and/or carrying out a method as set forth in any one of the preceding claims.
